Europäisches Patentamt

European Patent Office

Office européen des brevets

(11) Publication number : **0 296 808 B1**

## (12) EUROPEAN PATENT SPECIFICATION

(45) Date of publication of patent specification :
04.03.92 Bulletin 92/10

(51) Int. Cl.⁵ : **F15B 15/28, C22F 3/00**

(21) Application number : **88305656.6**

(22) Date of filing : **20.06.88**

(54) Monitoring system for position sensing and reciprocating rod used therein.

(30) Priority : **22.06.87 US 68985**

(43) Date of publication of application :
**28.12.88 Bulletin 88/52**

(45) Publication of the grant of the patent :
**04.03.92 Bulletin 92/10**

(84) Designated Contracting States :
**DE FR GB IT**

(56) References cited :
**EP-A- 0 151 759
CH-A- 652 496
DE-A- 2 732 282
OPTICAL ENGINEERING, vol. 19, no. 5, September/October 1980, pages 783-792; D.S.
GNANAMUTHU: "Laser surface treatment"**

(73) Proprietor : **PARKER HANNIFIN
CORPORATION
17325 Euclid Avenue
Cleveland Ohio 44112 (US)**

(72) Inventor : **Kurup, Mohan
26241 Lakeshore Boulevard
Euclid Ohio 44132 (US)**
Inventor : **Malek, Jeffrey C
105 Conger Avenue
Akron Ohio 44303 (US)**

(74) Representative : **Purvis, William Michael
Cameron et al
D. Young & Co. 10 Staple Inn
London WC1V 7RD (GB)**

Jouve, 18, rue Saint-Denis, 75001 PARIS

## Description

The invention relates to a method of producing a rod for use in a position sensing system.

Linear position sensing has normally used one of four methods to determine location. The methods are: (1) mechanical means whereby the movement of a rod or piston results in the subsequent motion of a mechanically attached mechanism that is then converted to a visual or electrical signal used for monitoring; (2) sonic means whereby the length of time for a signal to travel from a transducer to the rod and back to either the same or another transducer is measured to determine the distance from transducer(s) to rod; (3) optical means whereby photoelectric cells or the like are used visually to sense the position of the rod as the rod moves either in front of, or past the optical transducer; and (4) electronic means whereby some change in electrical or material property is measured as the rod is moved into or past a transducer.

The problem with the first method is that mechanical contact leads to friction or wear which can result in maintenance and reliability problems. The sonic method, on the other hand, is known to be highly accurate but at a high cost, such as the system that uses an electrical pulse to set up torsional strain pulses in a tube which are measured as a function of time. It is true that less expensive sonar-type devices are available but they suffer from being affected by temperature and fluid flow characteristics. The optical method can result in high accuracy with relatively low cost; however, optical systems are extremely dirt-and debris-sensitive which leads to maintenance and repair problems. Lastly, the electronic method used to measure some change in electrical material property of the rod may be an electrical resistance that varies as length varies with in-and-out movement; electronic coils that measure position by the inductance of the coil as a steel rod is moved in-and-out; changes in magnetization on the surface of the rod as it moves, similar to changes in magnetization of magnetic recording tape as it passes a transducer; or changes in magnetic permeability of the rod as it passes a transducer. These measurement methods suffer typically from dirt- and debris-sensitivity, short stroke, high cost, and vulnerability to changes in magnetization. Particularly, sensing systems using changes in magnetic permeability such as described in Patent Specification US-A-3 956 973, although effective are expensive and complicated to produce.

Methods of laser alloying surface treatment of materials employing a high power $CO_2$ laser are described in an article "Laser Surface Treatment" in Optical Engineering, Sept/Oct 1980, Vol. 19, No. 5.

According to the invention there is provided a method of producing a rod for use in a position sensing system wherein the rod is of a basic metallic material, includes at least one axial zone portion of differing magnetic character to the remainder of the rod and is positioned in close proximity to position detecting transducer means; the transducer means and the rod cooperating to detect the magnetic discontinuity of the rod and thereby the relative position of the rod; characterised by melting the surface of said zone portion to a desired depth, in the presence of at least one alloying element which diffuses into a thin layer at the melted surface and, after cooling, creates the said zone portion having a magnetic character different to that of the basic metallic material of the rod.

The invention can provide a highly reliable, cost effective method of forming a rod for a monitoring system for position sensing of the rod.

The rod can be used in a position sensing system by having zones of surface material of different magnetic character to the general surface material of the rod and can be economical to manufacture and reliable in operation.

Advantageously the rod is covered by a coating of non-magnetic material for corrosion resistance, smoothness, lubricity and wear resistance.

Preferably the base metal is a steel of ferritic structure and the at least one axial zone has substantially an austenitic structure.

Advantageously said at least one alloying element comprises carbon, nickel, chromium, manganese, silicon, aluminium or molybdenum.

The local heating can be done by a laser or an electron beam.

The transducer means can be a Hall-effect-type transducer.

Preferably the at least one alloying element is present in the initial base metal of the rod.

Advantageously the transducer means has at least two transducer units that are mounted with sufficient axial spacing such that the movement of the rod provides variations in electrical signal when the rod moves relative to the transducer units, and such that the signal phasing between the said axially spaced transducer units can be used to determine the direction of motion.

Preferably the width, the spacing and the magnetic character of the axially spaced zones is varied by controlling the at least one alloying element or the localized heating.

The invention is diagrammatically illustrated by way of example in the accompanying drawings, in which:-

Figure 1 is a schematic view, partly in section showing a hydraulic or pneumatic cylinder and a piston as used in the fluid power industry with a control box and a valve to determine cylinder movement;

Figure 2 is an enlarged side view, partially in section, of the piston and cylinder of Figure 1;

Figure 3 is an enlarged side view in section of a portion of a piston rod of Figure 1;

Figure 4 is an enlarged side view in section of a portion of a piston rod;

Figure 5 is a schematic view, partially in section, of a motor vehicle with a variable-rate spring/damper and a position sensor at each of the four corners, a control box, and an energy source to power the spring/damper system to determine vehicle motion relative to the unsuspended components; and

Figure 6 is an enlarged view, partially in section, of a spring/damper element, and the position-sensing element of Figure 5.

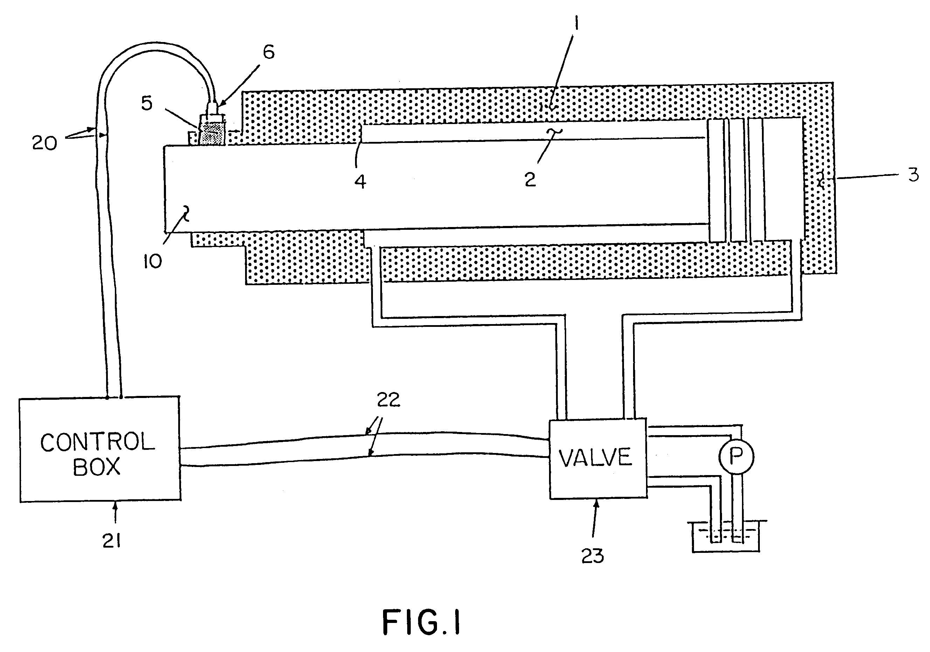

In the first embodiment described here a rod is used as part of a hydraulic or pneumatic cylinder in any application requiring fluid power, such as in robotics, factory automation, transportation, or agriculture and construction equipment. Figure 1 shows a typical cylinder, together with a control box and a valve. The control box and valve are only shown in diagrammatic form. In the simplest case, the control box can be a digital or analog readout and the valve can be hand-controlled as is common in the fluid power industry. For such a case the operator of the device observes the readout and uses that information to determine the direction and amount to open the valve. In the most complex case the control box is connected to many cylinders and to a proportional or servo valve for each of the cylinders. By monitoring and comparing the position information of each cylinder the control unit determines the direction and amount to open each of the valves independently.

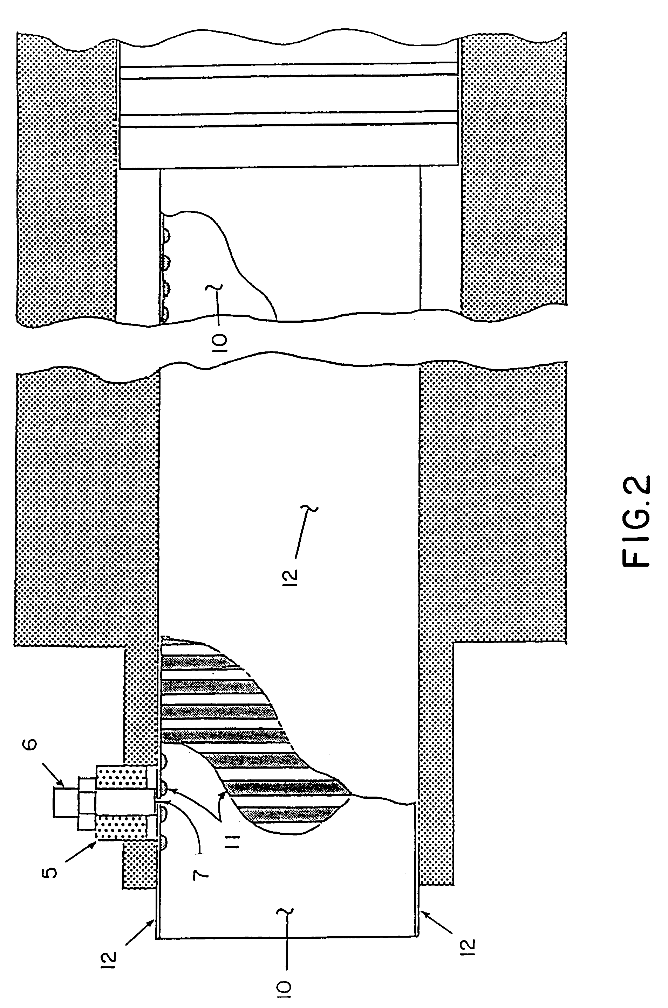

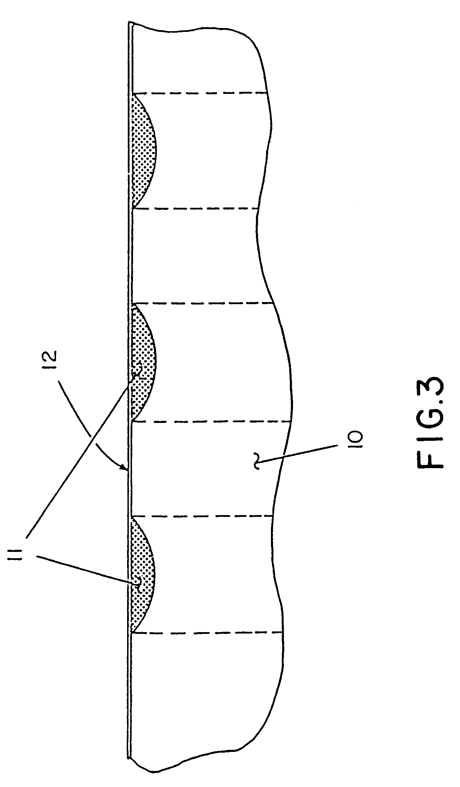

Referring to Figures 2 and 3 also, a cylinder member includes a cylinder body 1 typically of a high-strength metallic material. A cylindrical piston-receiving chamber 2 is defined in the body 1. An end wall 3 closes one end of the chamber 2. The other end of the chamber 2 is open as indicated by numeral 4. Included as part of the open end 4 are bearing and seal(s), or packing gland, which are well known in the art and are thus not shown to prevent confusion. Either incorporated as part of the seal or gland retainer or included as a totally separate addition to the open end of the cylinder is a mounting fixture 5 for securing and holding fixed transducer units 6.

A metal piston rod 10 typically made from a metallic material such as ferromagnetic steel, is positioned in the cylinder chamber 2 and extends through the open end of the cylinder 1. As is well known in the art, connected to the rod is a piston head and rings or seals; these are not shown to prevent confusion. In the embodiment of Figures 1 to 3, a series of rings or heat treated zones 11 extends axially along the length of the rod 10 at least for the rod length that passes the transducer units 6 during the operation cycle of the piston. These rings are formed by selectively heat treating the rod 10 with alloying stabilizing elements, to change the magnetic permeability of the material in the heat-treated zones 11 as will be more fully explained below.

On the surface of the rod 10, typically a thin non-magnetic coating 12 such as hard chrome plating as is known in the art, is applied which provides a hard, corrosion-resistant surface to reduce wear on the rod and bearing portions of the cylinder. If desired, this coating 12 could be of a polymer material. The transducer units 6 are of the kind that detect significant changes in magnetic permeability, which can be defined as the magnetic character of the material. Hall-effect-type transducers have been used for this application and are known in the art. These transducers 6 are mounted as shown in Figures 1 and 2 with a transducer face 7 positioned in close proximity to the rod 10 as it moves relative to the transducers 6.

The zones 11 are created by specially heat treating the rod 10. In one example the rod 10 is typically selectively coated with stabilizing element or elements. More specifically, the rod 10 is typically made from a ferromagnetic steel such as 52100 steel. This rod is heat-treated with a laser in selected portions or rings after the surface has been coated with austenitic stabilizing alloying element or elements such as carbon, nickel, chromium, manganese, silicon, aluminum or molybdenum. During the localized selective heat treating process the coating element diffuses into the surface of the base metal creating one of the zones 11 in the localized area by alloying with the base metal and thereby changing the magnetic permeability and character of the material.

In another example the rod 10 contains relatively high levels of a stabilizing element or elements; that is, the rod 10 is made from a ferromagnetic steel containing sufficient quantities of austenitic stabilizing element or elements such as carbon, nickel, chromium, manganese, silicon, aluminum or molydbenum. During typical metallurgical processing to produce the rod 10, the stabilizing element or elements do not have the appropriate heat treatment history to stabilize the austenitic phase throughout the rod. However, during the localized selective heat treatment process, the austenitic phase is stabilized in the base metal creating one of the zones 11 in the localized area of different magnetic permeability and character.

It is important that the heat treating be done by a method that allows for precise control of the heat affected zone on the piston rod surface. This is best done by a laser or electron beam energy source. It is to be further understood that the rod 10 could initially be of a relatively non-magnetic material and the zones 11 are transformed to be much more magnetic in character.

As a more specificexample, a piston rod of 52100 steel is provided in which the surface is uniformly coated with a thin layer of nickel material. This layer can be plated on the surface as is known art and is typically 0.025 mm (0.001 of an inch) or less. The rod is then subjected to precisely controlled heating source such as with laser or electron beam system. It has been found that a 1500 watt $CO_2$ laser focused to 0.203mm (0.008 of an inch) beam diameter in which the surface speed of the rod passing under the laser is 254 mm (10 inches) per second in the presence of argon or other inert gas has performed well. This process as described above provides a base portion with essentially a ferritic or martensitic structure and a zone portion of essentially austenitic structure.

As still a further specific example, a piston rod of type D3 tool steel which has a 2.1% by weight carbon content is provided. The rod is then subjected to a precisely controlled 1500 watt $CO_2$ laser focused to 0.203 mm (0.008 of an inch) beam diameter in which the surface speed of the rod portion passing under the laser is 254 mm (10 inches) per second in the presence of argon. This process provides for a heat-affected zone with essentially austenitic structure and a base portion with essentially ferritic or martensitic structure.

It is to be understood in either of these examples that other stabilizing alloying elements could equally well be used and processing parameters may be varied. What is essential is to provide the presence of alloying element or elements of sufficient quantity which when subjected to precisely controlled heating, phase change on the surface of the base material so that the magnetic character of the heat affected zone is altered. This provides for a cost effective, reliable method for measuring the position of the rod.

In operation, as the rod 10 passes the face 7 of the transducer 6, the ring zones 11 with different magnetic permeability are detected. The transducer 6 produces a signal which is a function of permeability and that signal is electrically transmitted by wires 20 to the control box 21 shown in Figure 1. The electronics in the control box 21 analyze the signal and, in the case of a feedback system, the control box 21 transmits an output by a wire 22 to the valve 23 that determines the direction of the flow of fluid to or from the cylinder chamber 2, thereby controlling the motion of the rod 10.

In the simplest feedback case, the rod 10 has two heat-treated ring zones 11, one at each end of the operational stroke. One transducer 6 would be needed at the open end of the cylinder 4 such that when the transducer 6 detects the change in magnetic permeability in one of the zones 11, the control box 21 would signal that the rod 10 had reached the end of the stroke thereby causing the valve 23 either to stop the fluid flow to the chamber 2 thereby stopping the rod 10, or to reverse the fluid flow to the chamber 2, thereby reversing the direction of the rod 10. In a case where highly accurate positioning is needed, the heat-treated zones 11 can be kept narrow and placed close together. The zones 11 can be either individual rings or a tight helix along the length of the rod 10. With the use of more than two zones 11 along the rod 10, typically at least two transducers 6, spaced at a predetermined separation along the cylinder axis, are needed to provide information on the direction of travel as the rod 10 moves relative to the transducers 6. The accuracy of the rod positioning is ultimately determined by the width sensitivity of the transducer 6.

In the case where the width sensitivity of the transducer is narrower than the narrowest width or separation achievable with the heat-treated zones, then more than two transducers are needed to read the position of the beginning or end of the zone to achieve the greatest positioning accuracy.

Ultimate positioning accuracy can be achieved with rods that have heat-treated zones 11 with equal width and spacing and with equal magnetic permeability as shown in Figure 3.

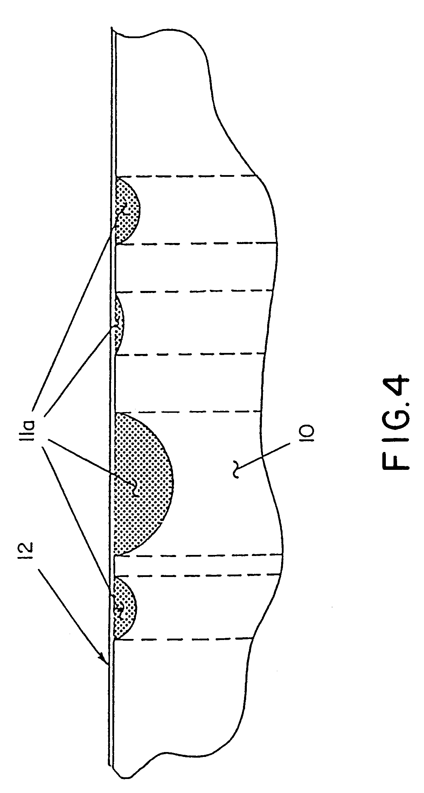

Additional information can be coded onto the rods as shown in Figure 4. Individual heat-treated zones 11a can vary in width, separation, or magnetic permeability by controlling the alloying elements and the directed energy source. With a suitable transducer system 6, the varying widths, separations, and magnetic permeability can be detected. Such a coding system can be used to encode absolute positioning information onto the rod 10.

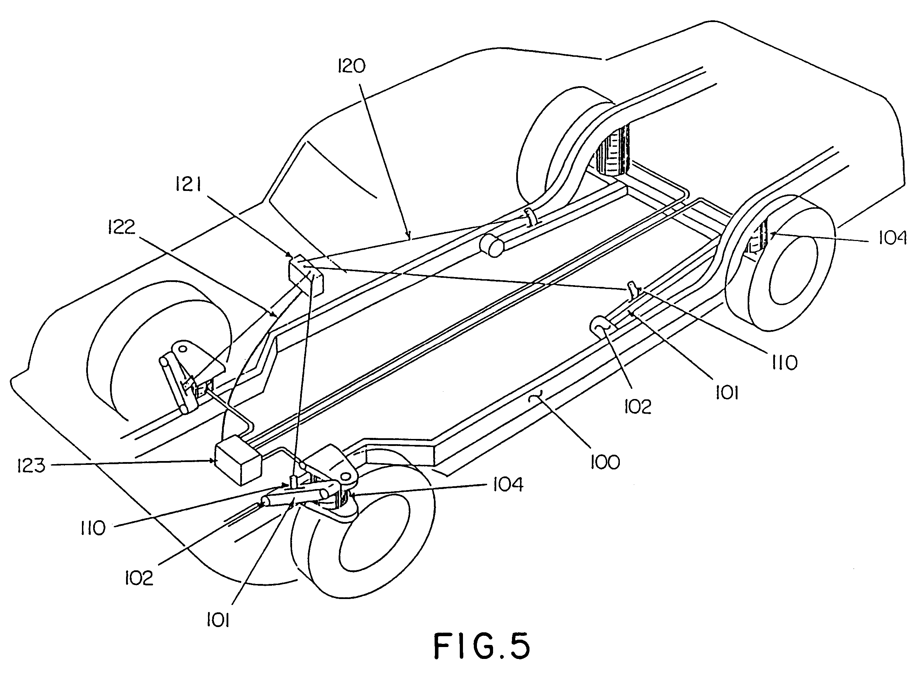

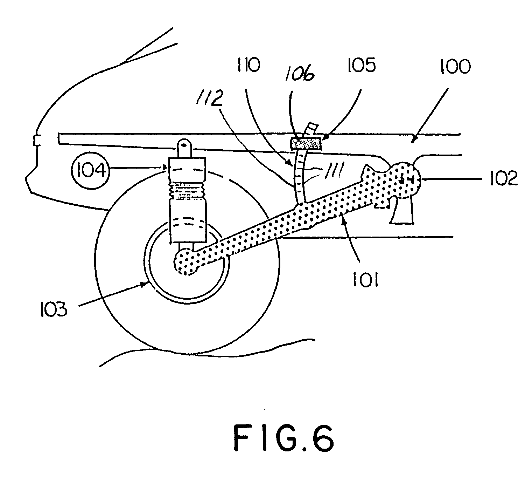

In the embodiment of Figures 5 and 6, the invention is used as part of an active suspension to control the motion of a suspended mass, for example an automobile or an automobile engine. Figure 5 shows an automobile with a variable rate spring/damper system, a control box, and an energy source for the spring/damper system. A spring/damper system, a control box, and an energy source, while not part of the invention, are shown in the drawings to assist understanding of the invention. Shown in Figure 6 is one wheel position of the vehicle with a variable spring/damper and the invention.

Referring to Figures 5 and 6, a vehicle suspension comprises a vehicle chassis 100 which is supported by typical means including a suspension arm 101 pivoted at a position 102 on the chassis 100, and attached to a wheel 103. Between the arm 101 and the chassis 100 is a spring/damper device 104 that supports and isolates the vehicle chassis from road inputs. Attached to the chassis 100 is a mounting fixture 105 for securing transducer units 106. Attached to the suspension arm 101 is a rod 110 that extends from the suspension arm 101 past the transducer units 106. The rod 110 which is similar in general scope to the rod 10 mentioned above is constructed of a metal which, in this embodiment, has a rectangular cross section and is curved so as to keep the relative orientation between the rod and the transducer units 106 unchanged as the suspension arm 101 travels through its operating range. Under normal operating conditions of the suspension, if the transducer units 106 were rigidly mounted to the chassis, some misalignment of the rod 110 and the transducer units 106 could occur due to the compliance of the chassis 100, the suspension arm 101, and the pivot 102. Since such misalignment is undesirable for accuracy of the reading, the mounting fixture 105 is constructed with sufficient fore-and-aft, and side-to-side compliance to allow for the rod-to-transducer spacing to remain fixed. Although not shown, it is desirable that seals or wipers also be incorporated in the fixture 105 to prevent dirt and debris from coming between the transducer units 106 and the rod 110. Means for constructing a compliant fixture and using seals and wipers are well known in the art.

In the embodiment of Figures 5 and 6, a series of zones 111 extends along the length of the rod 110 at least for the rod length that passes the transducer units 106 in the operating range of the suspension. The zones 111 are formed by selectively heat treating the rod 110 either to alloy phase-stabilizing elements into the base material of the rod 110, or to cause phase change where there is a sufficient amount of necessary alloying elements in the base material of the rod, thereby changing the magnetic permeability of the material in the heat-treated zones 111. On the surface of the rod 110, it is desirable that a thin non-magnetic coating 112, such as hard chrome plating or a hard lubricious polymer, be placed to provide a hard, corrosion-resistant surface. As in the previous embodiment, the transducer units 106 are of the kind that detect significant changes in magnetic permeability. These are mounted in the fixture 105 with the faces of the transducer units 106 positioned very close to, but not in contact with, the rod 110 as it moves relative to the transducer units 106. In operation, as the rod 110 passes the faces of the transducer units 106, the zones 111 with different magnetic permeability are detected. The transducer units 106 produce a signal which is a function of permeability and that signal is electrically transmitted by wires 120 to a control box 121 shown in Figure 5. The electronics in the control box 121 analyze the signal from each of the transducer units mounted at the four wheel locations on the chassis 100. Based on the analysis of the signals, the control box 121 transmits by wires 122 signals to the energy source 123 which, if necessary, changes the operating state of the spring/damper devices 104.

In the suspension application, information about the direction of the motion is normally needed. This typically requires that at least two transducer units 106 are positioned at each wheel location, with the transducer units 106 spaced at a predetermined separation along the axis of motion. As in the previous embodiment, the accuracy of the system is determined by the width sensitivity of the transducer, the width of the heat-treated zones, and the number of transducers at each wheel location. Most applications require that a suspension maintain an average height. For example, it is desirable that a vehicle remains level and with a fixed road clearance even though the load on the vehicle is changed. The invention can allow a desired mean-height to be encoded directly on the rod 110 by controlling the alloying elements and the directed energy source so as to vary the band width, separation, or magnetic permeability in the region of the rod 110 which is in front of the transducer units 106 at the mean height.

In still another embodiment of the invention for a suspension application, the position sensor can be incorporated as part of a shock absorber, or a device that appears similar to a shock absorber and is mounted in similar manner. Such an embodiment would use essentially the same type of rod and transducers as described in the embodiment shown in Figures 1-3 and is, therefore, not redescribed here.

## Claims

1. A method of producing a rod (10, 110) for use in a position sensing system wherein the rod (10, 110) is of a basic metallic material, includes at least one axial zone portion (11, 111) of differing magnetic character to the remainder of the rod (10, 110) and is positioned in close proximity to position detecting transducer means (6, 106); the transducer means (6, 106) and the rod (10, 110) cooperating to detect the magnetic discontinuity of the rod (10, 110) and thereby the relative position of the rod; characterised by melting the surface of said zone portion (11, 111) to a desired depth, in the presence of at least one alloying element which diffuses into a thin layer at the melted surface and, after cooling, creates the said zone portion (11, 111) having a magnetic character different to that of the basic metallic material of the rod (10, 110).

2. A method according to claim 1, wherein the rod (10, 110) is covered by a coating (12, 112) of non-magnetic material for corrosion resistance, smoothness, lubricity and wear resistance.

3. A method according to claim 1, wherein the basic metallic material of the rod (10, 110) is a steel of ferritic structure and the at least one axial zone (11, 111) has substantially an austenitic structure.

4. A method according to any one of claims 1 to 3, wherein the at least one alloying element comprises carbon, nickel, chromium, manganese, silicon, aluminium or molybdenum.

5. A method according to any one of the claims 1 to 4 wherein said melting is done by a laser or an electron beam.

6. A method according to claim 5, wherein the transducer (6, 106) means is a Hall-effect-type transducer.

7. A method according to claim 1, wherein the at least one alloying element is present in the initial base metal of the rod (10, 110).

8. A method according to any one of claims 1 to 7, in which the rod (10) reciprocates in a cylinder (1) and includes a plurality of axially spaced zones (11) in the basic metal material of a different magnetic character, and the transducer means (6) are associated with the cylinder (1) and positioned in close proximity to the reciprocating rod (6) such that the difference between the magnetic character of the basic metallic material and the plurality of axially spaced zones (11) on the rod (10) is detected by the transducer means (6) thereby allowing for the detection of the relative position of the rod (10).

9. A method according to claim 8, wherein the transducer means (6) has at least two transducer units that are mounted with sufficient axial spacing such that the movement of the rod (10) provides variations in electrical signal when the rod (10) moves relative to the transducer units, and such that the signal phasing between the said axially spaced transducer units can be used to determine the direction of motion.

10. A method according to claim 8, wherein the width, the spacing and the magnetic character of the axially spaced zones is varied by controlling the at least one alloying element or the localized heating.

## Patentansprüche

1. Verfahren zur Herstellung einer Stange (10, 110) zur Verwendung in einem Lageerfassungssystem, wobei die Stange (10, 110) aus einem Grundmetallmaterial besteht, mindestens einen axialen Zonenabschnitt (11, 111) mit einem von dem Rest der Stange (10, 110) abweichenden magnetischen Charakter umfaßt und nahe den Lageerfassungswandlereinrichtungen (6, 106) angeordnet ist, wobei die Wandlereinrichtungen (6, 106) und die Stange (10, 110) zur Erfassung der unterschiedlichen magnetischen Eignenschaften der Stange (10, 110) und somit zur Erfassung der relativen Lage der Stange zusammenwirken, **gekennzeichnet durch** das Schmelzen der Oberfläche des Zonenabschnitts (11, 111) bis zu einer gewünschten Tiefe, wobei zumindest ein Legierungselement vorhanden ist, das sich in einer dünnen Schicht auf der geschmolzenen Oberfläche verteilt und nach dem Abkühlen den Zonenabschnitt (11, 111) bildet, der einen von dem des Grundmetallmaterials der Stange (10, 110) abweichenden magnetischen Charakter aufweist.

2. Verfahren nach Anspruch 1, in dem die Stange (10, 110) wegen der Korrosionsbeständigkeit, der Glattheit, der Schmierfähigkeit und der Verschleißfestigkeit mit einem Überzug (12, 112) aus unmagnetischem Material bedeckt ist.

3. Verfahren nach Anspruch 1, in dem das Grundmetallmaterial der Stange (10, 110) ein Stahl mit ferritischer Struktur ist und die zumindest eine axiale Zone (11, 111) eine im wesentlichen austenitische Struktur aufweist.

4. Verfahren nach einem der Ansprüche 1 bis 3, in dem das zumindest eine Legierungselement Kohlenstoff, Nickel, Chrom, Mangan, Silizium, Aluminium oder Molybdän umfaßt.

5. Verfahren nach einem der Ansprüche 1 bis 4, in dem das Schmelzen mittels eines Lasers oder Elektronenstrahls ausgeführt wird.

6. Verfahren nach Anspruch 5, in dem die Wandlereinrichtung (6, 106) ein Wandler des Hall-Effekt-Typs ist.

7. Verfahren nach Anspruch 1, in dem das zumindest eine Legierungselement in dem Ausgangsgrundmetall der Stange (10, 110) vorhanden ist.

8. Verfahren nach einem der Ansprüche 1 bis 7, in dem sich die Stange (10) in einem Zylinder (1) hin- und herbewegt und in dem Grundmetallmaterial eine Vielzahl von axial beabstandeten Zonen (11) mit unterschiedlichem magnetischen Charakter aufweist, und die Wandlereinrichtungen (6) dem Zylinder (1) zugeordnet und nahe der sich hinund herbewegenden Stange (10) angeordnet sind, so daß der Unterschied zwischen dem magnetischen Charakter des Grundmetallmaterials und der Vielzahl der axial beabstandeten Zonen (11) auf der Stange (10) von den Wandlereinrichtungen (6) erfaßt wird, wodurch die Erfassung der relativen Lage der Stange (10) möglich wird.

9. Verfahren nach Anspruch 8, in dem die Wandlereinrichtung (6) zumindest zwei Wandlereinheiten aufweist, die mit einem ausreichenden axialen Abstand so angebracht sind, daß die Bewegung der Stange (10) Veränderungen im elektrischen Signal vorsieht, wenn sich die Stange (10) relativ zu den Wandlereinheiten bewegt, und daß die Signaländerungen zwischen den axial beabstandeten Wandlereinheiten zur Bestimmung der Bewegungsrichtung benutzt werden kann.

10. Verfahren nach Anspruch 8, in dem die Breite, der Abstand und der magnetische Charakter der axial beabstandeten Zonen durch die Auswahl des zumindest einen Legierungselements oder das Steuern der örtlichen Erwärmung variiert wird.

## Revendications

1. Procédé de fabrication d'une tige (10, 110) destinée à être utilisée dans un système pour signaler la position, dans lequel la tige (10, 110) est réalisée dans un matériau métallique de base, comprenant au moins une partie de zone axiale (11, 111) de caractère magnétique différent du reste de la tige (10, 110), cette zone étant située au voisinage immédiat de moyens de transducteur de détection de position (6, 106) ; les moyens de transducteur (6, 106) et la tige (10, 110) coopérant pour détecter la discontinuité magnétique de la tige (10, 110) et par conséquent la position relative de la tige, procédé caractérisé en ce qu'on fait fondre la surface de la partie de zone (11, 111) à une profondeur voulue en présence d'au moins un élément d'alliage qui diffuse dans une couche mince de la surface fondue et crée, après refroidissement, la partie de zone (11, 111) présentant un caractère magnétique différent de celui du matériau métallique de base de la tige (10, 110).

2. Procédé selon la revendication 1, caractérisé en ce que la tige (10, 110) est recouverte d'un revêtement (12, 112) de matériau non magnétique pour assurer la résistance à la corrosion, la douceur, l'onctuosité et la résistance à l'usure.

3. Procédé selon la revendication 1, caractérisé en ce que le matériau métallique de base de la tige (10, 110) est un acier de structure ferritique et en ce qu'au moins une zone axiale (11, 111) présente une structure essentiellement austénitique.

4. Procédé selon l'une quelconque des revendications 1 à 3, caractérisé en ce que l'élément d'alliage au moins unique est constitué par du carbone, du nickel, du chrome, du manganèse, du silicium, de l'aluminium ou du molybdène

5. Procédé selon l'une quelconque des revendications 1 à 4, caractérisé en ce que la fusion est effectuée par un laser ou un faisceau d'électrons.

6. Procédé selon la revendication 5, caractérisé en ce que les moyens de transducteur (6, 106) sont constitués par un transducteur de type à effet Hall.

7. Procédé selon la revendication 1, caractérisé en ce qu'au moins un élément d'alliage est présent dans le métal de base initial de la tige (10, 110).

8. Procédé selon l'une quelconque des revendications 1 à 7, caractérisé en ce que la tige (10) va et vient dans un cylindre (1) et comprend un certain nombre de zones axialement espacées (11), d'un caractère magnétique différent, dans le matériau métallique de base, et en ce' que les moyens de transducteur (6) sont associés au cylindre (1) et placés au voisinage immédiat de la tige de va-et-vient (6) de façon que la différence entre le caractère magnétique du matériau métallique de base et des différentes zones axialement espacées (11) sur la tige (10), soit détectée par les moyens de transducteur (6) pour permettre ainsi la détection de la position relative de la tige (10).

9. Procédé selon la revendication 8, caractérisé en ce que les moyens de transducteur (6) comportent au moins deux blocs de transducteurs montés avec un espacement axial suffisant pour que le mouvement de la tige (10) produise des variations de signal électrique lorsque la tige (10) se déplace par rapport aux blocs de transducteurs, et de façon qu'on puisse utiliser les phases relatives des signaux des différents blocs de transducteurs axialement espacés, pour déterminer le sens du déplacement.

10. Procédé selon la revendication 8, caractérisé en ce qu'on fait varier l'espacement et le caractère magnétique des zones axialement espacées, en contrôlant au moins un élément d'alliage ou le chauffage localisé.

FIG.1

EP 0 296 808 B1

FIG.2

EP 0 296 808 B1

FIG.3

EP 0 296 808 B1

FIG.4

FIG.5

FIG.6